# FASCICULE DE BREVET EUROPEEN

(11) **EP 2 681 443 B1**
(45) Date de publication et mention de la délivrance du brevet: **24.12.2014**
(21) Numéro de dépôt: 12706249.5
(22) Date de dépôt: 27.02.2012
(51) Int. Cl.: H02K 7/18, F03B 11/00

(54) **AILETTE ET INSTALLATION DE CONVERSION D'ÉNERGIE HYDRAULIQUE COMPRENANT UNE TELLE AILETTE**
RIPPE UND ANLAGE ZUR UMWANDLUNG VON HYDRAULISCHER ENERGIE MIT EINER SOLCHEN RIPPE
FIN AND INSTALLATION FOR CONVERTING HYDRAULIC ENERGY COMPRISING SUCH A FIN

(30) Priorité: 28.02.2011 FR 1151606
(43) Date de publication de la demande: 08.01.2014
(73) Titulaire: ALSTOM Renewable Technologies, 38100 Grenoble (FR)
(72) Inventeur: VUILLEROD, Gérard, F-38100 Grenoble (FR); MAZZOUJI, Farid, F-38210 Vourey (FR); BOMCHIL, Yoann, F-38600 Fontaine (FR)
(74) Mandataire: Pesce, Michele
(86) Numéro de dépôt international: PCT/EP2012/053283
(87) Numéro de publication internationale: WO 2012/116958

(56) Documents cités:
- FR-A1- 2 942 274
- US-A- 4 142 825

## Description

La présente invention a trait à une installation de conversion d'énergie hydraulique en énergie électrique ou mécanique, une telle installation comprenant une turbine hydraulique, un conduit d'amenée à la turbine d'un écoulement forcé d'eau et un conduit d'évacuation de cet écoulement lorsqu'il sort de la turbine.

Dans une telle installation de production d'énergie électrique ou mécanique à partir d'énergie hydraulique, une des difficultés est le contrôle du taux d'oxygène dissous dans l'eau évacuée dans le conduit d'évacuation. Pour des raisons écologiques, ce taux d'oxygène ne doit pas être inférieur à un seuil minimum, afin de respecter le milieu aquatique en aval de l'installation.

Or, il est difficile de contrôler ce taux d'oxygène car il varie au cours des saisons. Ainsi, en hiver l'eau a tendance à être chargée en oxygène car elle provient généralement de la fonte des neiges. Au contraire, en été, souvent l'eau stagne en amont de l'installation et présente un taux d'oxygène dissous généralement trop faible par rapport au seuil minimum.

US-A-2 300 748 et US-A-4 142 825 concernent une installation hydraulique comprenant un conduit d'évacuation pour évacuer un écoulement d'eau en sortie d'une turbine. L'intérieur du conduit d'évacuation est équipé de nervures creuses. Une conduite amène de l'air sous pression à l'intérieur des nervures. Cet air est injecté dans l'eau en sortie de la turbine par l'intermédiaire de trous percés dans les nervures. Ces dispositifs nécessitent l'emploi d'un appareil auxiliaire pour injecter de l'air comprimé dans les nervures.

C'est à cet inconvénient qu'entend plus particulièrement remédier l'invention en proposant une ailette destinée à être installée en saillie à l'intérieur d'un conduit d'évacuation d'une machine hydraulique. Selon l'invention, l'ailette comprend une première face qui comporte des trous et une deuxième face qui est pleine. L'ailette définit à elle seule, entre la première face et la deuxième face, une cavité reliant l'extérieur du conduit d'évacuation aux trous de la première face.

Grâce à l'invention, la position angulaire des ailettes est déterminée pour créer une surpression, du côté de l'ailette qui fait face à l'écoulement, et une dépression, du côté opposé. Cette dépression permet d'aspirer automatiquement, par les trous des ailettes, de l'air extérieur au conduit d'évacuation et d'injecter l'air aspiré dans l'eau évacuée, sans avoir besoin d'utiliser un dispositif actif qui fournit de l'air comprimé. D'autre part, il est possible de modifier l'orientation angulaire des ailettes pour faire varier la quantité d'air que l'on souhaite dissoudre dans l'écoulement d'eau qui traverse l'installation.

Par ailleurs, les ailettes peuvent également être utilisées afin de diminuer la formation des tourbillons ou turbulences, généralement qualifiées de « torches », qui tendent à se former dans le conduit d'évacuation et provoquent une perte de rendement de l'installation : grâce à l'invention, il est possible d'adapter l'orientation des ailettes en tenant compte de l'éventuelle composante de rotation de l'écoulement en sortie de turbine, ce qui permet de stabiliser l'écoulement dans le conduit d'évacuation.

Selon des aspects avantageux mais non obligatoires de l'invention, une telle installation peut incorporer une ou plusieurs des caractéristiques suivantes, prises dans toute combinaison techniquement admissible :
- La première face de l'ailette est plane.
- La deuxième face de l'ailette est plane.
- La première face et la deuxième face de l'ailette sont parallèles.
- La première face de l'ailette et la deuxième face de l'ailette sont opposées et sont disposées de part et d'autre d'une surface médiane de l'ailette.

L'invention concerne également une installation de conversion d'énergie hydraulique en énergie électrique, cette installation comprenant une machine hydraulique, un conduit d'amenée à la machine hydraulique d'un écoulement forcé d'eau, un conduit d'évacuation de l'écoulement en sortie de la machine hydraulique et des éléments en saillie à partir d'une paroi du conduit d'évacuation qui définissent chacun une cavité reliant l'extérieur du conduit d'évacuation à des trous ménagés dans les éléments en saillie. Conformément à l'invention les éléments en saillie comprennent au moins une ailette conforme à l'invention, installée en saillie à l'intérieur du conduit d'évacuation, qui est mobile en rotation autour d'un axe sécant à la paroi du conduit d'évacuation et l'installation comprend des moyens de commande de la position angulaire de chaque ailette autour de son axe de rotation.

De manière avantageuse mais non obligatoire, au moins une ailette est rétractable dans la paroi du conduit d'évacuation et des moyens sont aptes à régler l'enfoncement de chaque ailette rétractable dans la paroi.

L'invention sera mieux comprise et d'autres avantages de celle-ci apparaîtront plus clairement à la lumière de la description qui va suivre d'une installation conforme à son principe, donnée uniquement à titre d'exemple et faite en référence aux dessins annexés dans lesquels :
- la figure 1 est une représentation schématique de principe, en coupe, d'une installation conforme à l'invention ;
- la figure 2 est une vue à plus grande échelle correspondant au détail II à la figure 1, montrant en coupe une ailette ainsi que des moyens de retenue de l'ailette, qui appartiennent à l'installation de la figure 1 ;
- la figure 3 est une vue latérale à plus grande échelle de l'ailette de la figure 2 ; et
- la figure 4 est une coupe, selon la ligne IV-IV à la figure 3, représentant l'ailette dans un écoulement d'eau de l'installation de la figure 1.

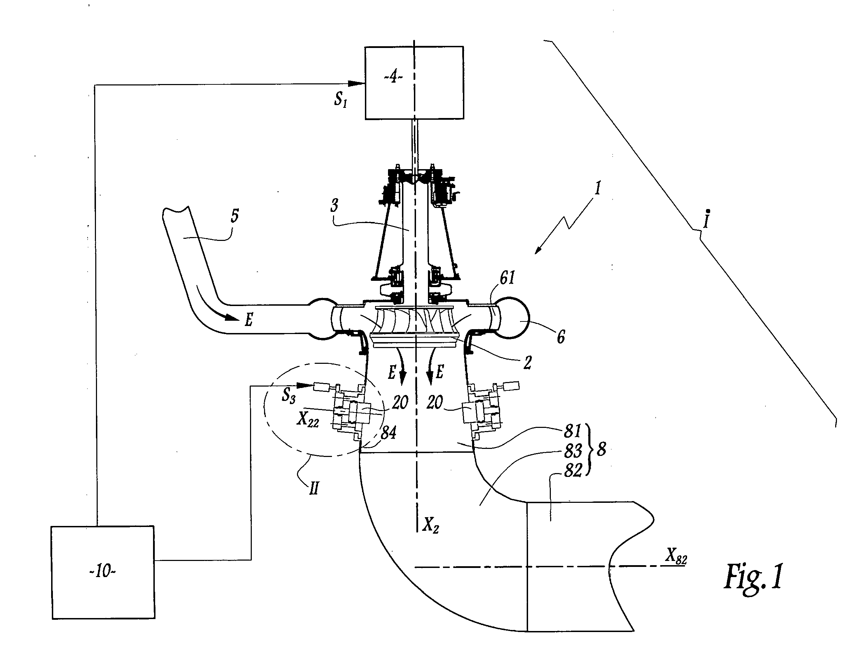

L'installation I représentée à la figure 1 comprend une turbine 1 de type Francis, dont la roue 2 est destinée à être mise en rotation, autour d'un axe vertical X₂, par un écoulement forcé d'eau E provenant d'une retenue d'eau non représentée. Un arbre 3, solidaire de la roue 2, est couplé à un alternateur 4 qui délivre un courant alternatif à fréquence fixe à un réseau non représenté. L'installation I permet donc de convertir l'énergie hydraulique de l'écoulement E en énergie électrique. L'installation I peut comprendre plusieurs turbines 1 alimentées à partir de la retenue d'eau.

En variante, l'arbre 3 peut être couplé à un ensemble mécanique, auquel cas l'installation I convertit l'énergie hydraulique de l'écoulement E en énergie mécanique.

Une conduite d'alimentation 5 permet d'amener l'écoulement E à la roue 2 et s'étend entre la retenue d'eau et une bâche 6 équipée de directrices 61 qui régulent l'écoulement E.

Un conduit 8 est prévu en aval de la turbine 1 pour évacuer l'écoulement E et le renvoyer vers le lit d'une rivière ou d'un fleuve à partir de laquelle ou duquel est alimentée la retenue d'eau. Ce conduit d'évacuation 8 est parfois qualifié de conduit d'aspiration.

Une unité de commande 10 est prévue pour piloter la turbine 1 en fonction, notamment, des besoins en électricité du réseau alimenté à partir de l'alternateur 4 et du débit d'eau disponible pour l'écoulement E. Pour ce faire, l'unité de commande 10 adresse aux directrices 61 un signal de commande S₁ permettant d'ajuster le débit d'eau passant dans la machine et donc la puissance restitué par l'alternateur 4 afin de satisfaire les besoins du réseau électrique.

Le conduit 8 comprend une partie amont 81 sensiblement verticale, tronconique et centrée sur l'axe de rotation X₂ de la roue 2. Le conduit 8 comprend également une partie aval 82 centrée sur un axe X₈₂ sensiblement horizontal. Cet axe X₈₂ est sensiblement horizontal en ce sens qu'il forme avec un plan horizontal un angle inférieur à 20°. En pratique, l'axe X₈₂ peut être légèrement ascendant dans le sens de l'écoulement E. Un coude 83, à 90° relie les parties 81 et 82 du conduit 8.

Le conduit 8 est pourvu, dans sa partie amont 81, de plusieurs ailettes 20 qui font saillie, à partir de la paroi 84 de la partie amont 81, en direction de l'axe X₂. Ces ailettes 20 sont destinées à être léchées par une partie de l'écoulement E qui s'écoule, en sortant de la roue 2, le long de la paroi 84. Les ailettes 20 sont rapportées, autrement dit, elles ne font pas partie du conduit 8 et sont assemblées au conduit 8.

La figure 1, qui est une section dans un plan vertical comprenant l'axe X₂, montre deux ailettes 20 mais en pratique, le nombre d'ailettes 20 peut être supérieur à deux. Ce nombre est choisi en fonction du diamètre de la partie amont 81 et du débit prévu pour l'écoulement E.

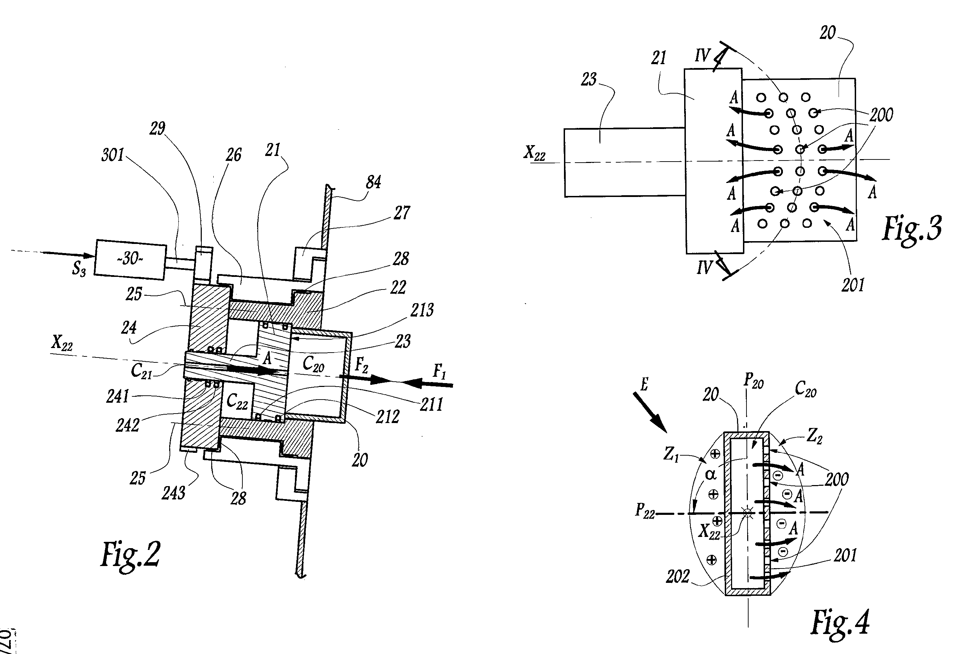

Comme le montrent plus particulièrement les figures 2 et 4, chaque ailette 20 est creuse et comprend deux faces latérales 201 et 202 planes opposées parallèles, disposées de part et d'autre d'un plan médian P₂₀ situé entre les faces latérales 201 et 202. Le plan médian P₂₀ est une surface médiane de l'ailette 20. Une première face latérale 201 de chaque ailette 20 est percée de plusieurs trous 200 qui communiquent avec une cavité C₂₀, définie à l'intérieur de l'ailette 20, entre les faces latérales 201 et 202. Une deuxième face latérale 202 de chaque ailette 20 est pleine, c'est-à-dire qu'elle ne comporte pas de trous.

Chaque ailette 20 définit à elle seule une cavité C₂₀, autrement dit, chaque cavité C₂₀ est entièrement formée par une ailette 20. Par exemple, la cavité C₂₀ n'est pas formée par une partie du conduit d'évacuation 8.

Comme il ressort plus particulièrement de la figure 2, chaque ailette 20 est solidaire d'un piston 21 monté dans un corps 22 cylindrique à base circulaire, centré sur un axe X₂₂ perpendiculaire à la paroi 84. Le piston 21 est équipé de joints d'étanchéité 211 et 212 et est solidaire d'une tige 23 qui traverse une plaque 24 en forme de disque, avec possibilité de coulissement par rapport à cette plaque le long de l'axe X₂₂, comme indiqué par les flèches F₁ et F₂. Le piston 21 et la tige 23 sont percés d'un canal longitudinal C₂₁, centré sur l'axe X₂₂, qui relie la cavité C₂₀ à l'extérieur du conduit d'évacuation 8. Les trous 200 communiquent ainsi avec l'atmosphère extérieure.

La plaque 24 est équipée de joints d'étanchéité 241 et 242 qui assurent, avec les joints 211 et 212, l'isolation fluidique vis-à-vis de l'extérieur d'une chambre C₂₂ ménagée radialement à l'intérieur du corps 22, entre la plaque 24 et le piston 21 et autour de la tige 23.

La plaque 24 est fixée sur le corps 22 au moyen de vis 25 représentées par leurs traits d'axe.

La chambre C₂₂ est alimentée, par un conduit non représenté, en eau provenant de la conduite 5. Ceci permet de mettre en pression la chambre C₂₂, ce qui a pour effet de repousser le piston 21, dans le sens de la flèche F₂, et de faire dépasser l'ailette 20 en direction de l'axe X₂, par rapport à la paroi 84.

La pression d'alimentation de la chambre C₂₂ permet de contrôler la position, le long de l'axe X₂₂, du piston 21 et de l'ailette 20. Le piston 21 et l'ailette 20 sont donc mobiles en translation, le long de l'axe X₂₂, selon les flèches F₁ et F₂ à la figure 2. Il est possible de ne pas alimenter la chambre C₂₂ en eau sous pression, de telle sorte que l'ailette 20 est rétractée ou enfoncée, par rapport à la paroi 84, à l'extérieur du conduit 8, du fait de la pression de l'eau sur une face 213 du piston 21 tournée vers le conduit 8.

Le sous-ensemble formé par les pièces 20 à 25 est monté, avec possibilité de rotation autour de l'axe X₂₂, dans une chemise 26 immobilisée dans une couronne 27 fixe par rapport à la paroi 84. Les pistons 21 et l'ailette 20 sont donc mobiles en rotation autour de l'axe X₂₂. Des joints formant palier sont éventuellement disposés radialement autour du corps 22 et de la plaque 24 et permettent la rotation du sous-ensemble précité par rapport à la chemise 26.

Dans sa partie qui dépasse axialement, le long de l'axe X₂₂, par rapport à la chemise 26, la plaque 24 est pourvue d'une denture radiale externe 243 qui engrène avec un pignon 29 entraîné par l'arbre de sortie 301 d'un servomoteur électrique 30. Ce moteur est commandé par l'unité de commande 10 au moyen d'un signal électronique S₃.

Le servomoteur 30 permet donc d'entraîner en rotation le sous ensemble formé des pièces 20 à 25 autour de l'axe X₂₂, en fonction d'un signal de commande S₃ reçu de l'unité de commande 10. Cette rotation permet de faire varier la position angulaire de l'ailette 20 autour de l'axe X₂₂.

Comme il ressort de la figure 3, la position angulaire de chaque ailette 20 peut être mesurée par un angle α pris, au dessus de l'axe X₂₂, entre le plan médian P₂₀ de l'ailette 20 et un plan horizontal P₂₂ contenant l'axe X₂₂. Lorsque les faces latérales 201 et 202 des ailettes 20 sont verticales, l'angle α est égal à 90°.

En fonctionnement, lorsque l'on souhaite dissoudre de l'air dans l'écoulement d'eau E évacué par le conduit d'évacuation 8, en vue d'augmenter son taux d'oxygène dissous, il convient de sortir les ailettes 20 dans le conduit d'évacuation 8, selon la flèche F₂, pour que les ailettes 20 dépassent en direction de l'axe X₂, par rapport à la paroi 84. Ce mouvement est piloté par l'unité de commande 10.

La position angulaire α de chaque ailette 20 est réglée de manière à ce que le plan P₂₀ soit incliné par rapport à l'écoulement E, la deuxième face 202 des ailettes 20 faisant face à l'écoulement E, comme représenté à la figure 4. La position angulaire α est pilotée par l'unité de commande 10, qui délivre au moteur 30 un signal S₃ pour créer une zone Z₁ en surpression, à proximité de la deuxième face 202, et une zone Z₂ en dépression, à proximité de la première face 201.

Grâce à la dépression dans la zone Z₂, de l'air extérieur est automatiquement aspiré dans la cavité C₂₀ et est injecté dans l'écoulement E, au travers des trous 200, comme indiqué par les flèches A aux figures 2 à 4.

La position angulaire α des ailettes 20 influe sur l'intensité de la dépression créée dans la zone Z₂ et permet donc d'influer sur la quantité d'air injecté dans l'écoulement E.

Les dimensions et le nombre des trous 200 sont déterminés en fonction de la dimension et de la quantité de bulles d'air que l'on souhaite dissoudre dans l'écoulement E.

De manière avantageuse, les ailettes 20 peuvent être utilisées pour réduire les fluctuations de pression et la formation de torches turbulentes qui apparaissent, en service, dans le conduit d'évacuation 8. Pour ce faire, l'angle α des ailettes 20 peut être ajusté pour modifier l'écoulement E, comme enseigné par exemple par le document FR-A-2 942 274. En variante, la position de chaque ailette 20 le long de son axe de rotation X₂₂ peut être commandée par des moyens autres qu'une chambre de pression alimentée en eau.

Selon la géométrie des faces 201 et 202 et la disposition de la face 201 par rapport à la face 202, la surface correspondant au plan médian P₂₀ n'est pas forcément plane. Par exemple, lorsque les faces 201 et 202 sont en forme de portion de cylindre à section circulaire, le côté concave des faces 201 et 202 étant tourné du même côté, la surface médiane est une portion de cylindre à section circulaire qui a un rayon compris entre le rayon de la face 201 et de la face 202.

On peut utiliser, par exemple, un servomoteur électrique ou un vérin hydraulique, mécanique ou électrique.

En variante, au moins une des ailettes 20 peut ne pas être rétractable. Dans ce cas, lorsqu'on ne souhaite pas dissoudre de l'oxygène dans l'écoulement E, les faces 201 et 202 de ces ailettes 20 non rétractables sont orientées parallèlement à l'écoulement E, afin de ne pas perturber l'écoulement.

L'invention décrite ci-dessus est représentée sur les figures dans le cas où l'axe X₂₂ de rotation des ailettes 20 est perpendiculaire à la paroi 84. Ceci n'est pas obligatoire et il suffit que l'axe X₂₂, qui est fixe par rapport à la paroi 84, soit sécant à cette paroi.

L'invention a été représentée dans le cas où toutes les ailettes 20 sont orientables, c'est-à-dire mobiles en rotation autour d'un axe sécant, en particulier perpendiculaire, à la paroi 84 du conduit d'évacuation 84. En variante, seules certaines ailettes 20 peuvent être orientables. De plus, seules certaines des ailettes 20 peuvent comporter des trous 200. Ces ailettes 200 non trouées peuvent être utilisées pour éviter la formation de torches tourbillonnaires.

L'invention a été représentée avec un servomoteur associé à chaque ailette 20, ce qui permet de commander les ailettes 20 individuellement. La synchronisation entre le mouvement des ailettes 20 est assurée par l'unité de commande 10 et sa gestion des différents signaux S₃ destinés aux différents moteurs 30.

En variante, on peut utiliser des moyens mécaniques reliant entre elles les ailettes 20, ce qui permet d'assurer une commande groupée des ailettes 20. On peut, par exemple, utiliser des chaînes ou un cercle de vannage tel que connu, par exemple, pour la commande des directrices 61.

D'autres dispositifs peuvent être envisagés pour assurer la rotation des ailettes, avec commande individuelle ou groupée, des ailettes 20. En pratique, cette rotation peut être assurée par tout actionneur adapté, par exemple un vérin rotatif ou linéaire associé à une bielle. Les vérins peuvent être actionnés par de l'huile, un courant électrique, de l'air comprimé ou de l'eau.

L'invention a été représentée lors de son application avec une turbine de type Francis. Elle est toutefois applicable à d'autres types de turbine, telle que les turbines Kaplan et les turbines de type hélice, ainsi qu'aux turbine-pompes.

## Revendications

1. Ailette (20) destinée à être installée en saillie à l'intérieur d'un conduit d'évacuation (8) d'une machine hydraulique (1), **caractérisé en ce que** l'ailette (20) comprend une première face (201) qui comporte des trous (200) et une deuxième face (202) qui est pleine, l'ailette (20) définissant à elle seule, entre la première face (201) et la deuxième face (202), une cavité (C₂₀) reliant l'extérieur du conduit d'évacuation (8) aux trous (200) de la première face (201).

2. Ailette (20) selon la revendication 1, **caractérisée en ce que** la première face (201) de l'ailette (20) est plane.

3. Ailette (20) selon l'une des revendications précédentes, **caractérisée en ce que** la deuxième face (202) de l'ailette (20) est plane.

4. Ailette (20) selon l'une des revendications précédentes, **caractérisée en ce que** la première face (201) et la deuxième face (202) de l'ailette (20) sont parallèles.

5. Ailette (20) selon l'une des revendications précédentes, **caractérisée en ce que** la première face (201) de l'ailette (20) et la deuxième face (201) de l'ailette (20) sont opposées et sont disposées de part et d'autre d'une surface médiane (P₂₀) de l'ailette (20).

6. Ailette (20) selon l'une des revendications précédentes, **caractérisée en ce que** les dimensions de l'ailette (20) autorisent la rotation de l'ailette (20) par rapport au conduit d'évacuation (8), autour d'un axe (X₂₂) sécant à la paroi (84) du conduit d'évacuation (8).

7. Installation (I) de conversion d'énergie hydraulique en énergie électrique, cette installation comprenant une machine hydraulique (1), un conduit (5) d'amenée à la machine hydraulique (1) d'un écoulement forcé (E) d'eau, un conduit d'évacuation (8) de l'écoulement (E) en sortie de la machine hydraulique (1) et des éléments en saillie à partir d'une paroi (84) du conduit d'évacuation (8) qui définissent chacun une cavité (C₂₀) reliant l'extérieur du conduit d'évacuation (8) à des trous (200), ménagés dans les éléments en saillie, l'installation (I) étant **caractérisée en ce que** les éléments en saillie comprennent au moins une ailette (20) selon l'une des revendications précédentes, installée en saillie à l'intérieur du conduit d'évacuation (8), qui est mobile en rotation autour d'un axe (X₂₂) sécant à la paroi (84) du conduit d'évacuation (8) et **en ce que** l'installation (I) comprend des moyens de commande (10) de la position angulaire (α) de chaque ailette (20) autour de son axe de rotation (X₂₂).

8. Installation (I) selon la revendication 7, **caractérisée en ce qu'**au moins une ailette (20) est rétractable dans la paroi (84) du conduit d'évacuation (8) et **en ce que** des moyens (30) sont aptes à régler l'enfoncement de chaque ailette rétractable (20) dans la paroi (84).

## Patentansprüche

1. Rippe (20), die dazu bestimmt ist, ins Innere eines Abflussrohrs (8) einer hydraulischen Maschine (1) vorstehend eingebaut zu werden, **dadurch gekennzeichnet, dass** die Rippe (20) eine Löcher (200) aufweisende erste Seite (201) und eine massive zweite Seite (202) enthält, wobei die Rippe (20) selbst zwischen der ersten Seite (201) und der zweiten Seite (202) einen Hohlraum (C₂₀) definiert, der die Außenseite des Abflussrohrs (8) mit den Löchern (200) der ersten Seite (201) verbindet.

2. Rippe (20) nach Anspruch 1, **dadurch gekennzeichnet, dass** die erste Seite (201) der Rippe (20) eben ist.

3. Rippe (20) nach einem der vorhergehenden Ansprüche, **dadurch gekennzeichnet, dass** die zweite Seite (202) der Rippe (20) eben ist.

4. Rippe (20) nach einem der vorhergehenden Ansprüche, **dadurch gekennzeichnet, dass** die erste Seite (201) und die zweite Seite (202) der Rippe (20) parallel sind.

5. Rippe (20) nach einem der vorhergehenden Ansprüche, **dadurch gekennzeichnet, dass** die erste Seite (201) der Rippe (20) und die zweite Seite (201) der Rippe (20) einander gegenüberliegen und zu beiden Seiten einer Mittelfläche (P₂₀) der Rippe (20) angeordnet sind.

6. Rippe (20) nach einem der vorhergehenden Ansprüche, **dadurch gekennzeichnet, dass** die Abmessungen der Rippe (20) die Drehung der Rippe (20) bezüglich des Abflussrohrs (8) um eine die Wand (84) des Abflussrohrs (8) schneidende Achse (X₂₂) erlauben.

7. Anlage (I) zur Umwandlung von hydraulischer Energie in elektrische Energie, wobei diese Anlage eine hydraulische Maschine (1), ein Zufuhrrohr (5) einer Zwangsströmung (E) von Wasser zur hydraulischen Maschine (1), ein Abflussrohr (8) der Strömung (E) am Ausgang der hydraulischen Maschine (1) und ausgehend von einer Wand (84) des Abflussrohrs (8) vorstehende Elemente enthält, die je einen Hohlraum (C₂₀) definieren, der die Außenseite des Abflussrohrs (8) mit Löchern (200) verbindet, die in den vorstehenden Elementen ausgespart sind, wobei die Anlage (I) **dadurch gekennzeichnet ist, dass** die vorstehenden Elemente mindestens eine ins Innere des Abflussrohrs (8) vorstehend eingebaute Rippe (20) nach einem der vorhergehenden Ansprüche enthalten, die um eine die Wand (84) des Abflussrohrs (8) schneidende Achse (X₂₂) drehbeweglich ist, und dass die Anlage (I) Steuereinrichtungen (10) der Winkelstellung (α) jeder Rippe (20) um ihre Drehachse (X₂₂) enthält.

8. Anlage (I) nach Anspruch 7, **dadurch gekennzeichnet, dass** mindestens eine Rippe (20) in die Wand (84) des Abflussrohrs (8) einziehbar ist, und dass Einrichtungen (30) fähig sind, das Eindrücken jeder einziehbaren Rippe (20) in die Wand (84) zu regeln.

## Claims

1. Fin (20) intended to be installed projecting into a discharge duct (8) of a hydraulic machine (1), **characterized in that** the fin (20) comprises a first face (201) which comprises holes (200) and a second face (202) which is solid, the fin (20) on its own defining, between the first face (201) and the second face (202), a cavity (C₂₀) that connects the outside of the discharge duct (8) to the holes (200) of the first face (201).

2. Fin (20) according to Claim 1, **characterized in that** the first face (201) of the fin (20) is planar.

3. Fin (20) according to one of the preceding claims, **characterized in that** the second face (202) of the fin (20) is planar.

4. Fin (20) according to one of the preceding claims, **characterized in that** the first face (201) and the second face (202) of the fin (20) are parallel.

5. Fin (20) according to one of the preceding claims, **characterized in that** the first face (201) of the fin (20) and the second face (201) of the fin (20) are opposite and positioned one on each side of a median surface (P₂₀) of the fin (20).

6. Fin (20) according to one of the preceding claims, **characterized in that** the dimensions of the fin (20) allow the fin (20) to rotate with respect to the discharge duct (8) about an axis (X₂₂) secant with the wall (84) of the discharge duct (8).

7. Installation (I) for converting hydraulic energy into electrical energy, this installation comprising a hydraulic machine (1), a duct (5) leading a force flow (E) of water to the hydraulic machine (1), a discharge duct (8) discharging the flow (E) at the outlet from the hydraulic machine (1) and elements projecting from a wall (84) of the discharge duct (8) which each define a cavity (C₂₀) connecting the outside of the discharge duct (8) to holes (200) formed in the projecting elements, the installation (I) being **characterized in that** the projecting elements comprise at least one fin (20) according to one of the preceding claims, installed to project into the discharge duct (8), and capable of rotation about an axis (X₂₂) secant with the wall (84) of the discharge duct (8), and **in that** the installation (I) comprises control means (10) controlling the angular position (α) of each fin (20) about the axis of rotation (X₂₂) thereof.

8. Installation (I) according to Claim 7, **characterized in that** at least one fin (20) can be retracted into the wall (84) of the discharge duct (8) and **in that** means (30) are able to regulate the degree to which each retractable fin (20) is recessed into the wall (84).
